# DEMANDE DE BREVET EUROPEEN

(11) **EP 1 039 604 A1**
(43) Date de publication de la demande: **27.09.2000**
(21) Numéro de dépôt: 00420047.3
(22) Date de dépôt: 21.03.2000
(51) Int. Cl.: H02B 1/21

(54) **Système de distribution d'énergie électrique dans les étages d'un immeuble**

(30) Priorité: 22.03.1999 FR 9903697
(71) Demandeur: MECELEC INDUSTRIES, F-07300 Tournon sur Rhône (FR)
(72) Inventeur: Senebier, Claude, 26000 Valence (Drôme) (FR); Sage, Michel, 07300 Tournon-sur-Rhone (FR)
(74) Mandataire: Myon, Gérard Jean-Pierre

(57) **Abrégé**

A chaque étage, un jeu de barres (10) disposées parallèlement les unes aux autres selon une direction (X-X') globalement horizontale est prévu, ces barres étant réparties selon une géométrie en escalier dans des zones (20A, 20B) où elles sont aptes à coopérer avec des connecteurs (25) de raccordement de câbles (26) d'alimentation d'au moins un site d'utilisation. Ces barres sont coplanaires dans une zone (30) de raccordement à des câbles (2₁, 2₂) ou barres formant la colonne montante (1).

## Description

L'invention a trait à un système de distribution d'énergie électrique dans les étages d'un immeuble.

Jusqu'à présent, il est connu d'alimenter en courant électrique différents sites d'utilisation répartis dans un immeuble grâce à des barres rigides ou semi-rigides conductrices disposées verticalement et formant une structure dénommée "colonne montante" à laquelle est associé, à chaque étage, un répartiteur de l'énergie électrique disponible à travers ces barres. Ces barres peuvent être au nombre de quatre afin de fournir un courant triphasé ou un courant monophasé, en fonction des besoins des utilisateurs.

La mise en place de telles barres rigides ou semi-rigides peut s'avérer délicate, car l'espace réservé à la colonne montante doit être de dimensions aussi réduites que possible. En outre, les jeux de barres actuellement utilisés sont le plus souvent limités à un courant de 200 ampères, ce qui peut conduire à multiplier le nombre de colonnes montantes dans un immeuble. Enfin, des répartiteurs spécifiques doivent être développés et fabriqués pour remplir la fonction précitée à chaque étage, de telle sorte que ces matériels sont relativement onéreux et mal connus des opérateurs.

C'est à ces inconvénients qu'entend plus particulièrement remédier l'invention en proposant un système de distribution d'énergie qui permet l'utilisation de dispositifs de raccordement électrique connus et appréciés par ailleurs et qui autorise l'utilisation de câbles conducteurs pour former la colonne montante.

Dans cet esprit, l'invention concerne un système du type précité qui comprend, à chaque étage, un jeu de barres disposées parallèlement les unes aux autres selon une direction globalement horizontale, ces barres étant
- réparties selon une géométrie en escalier dans au moins une zone où elles sont aptes à coopérer avec des connecteurs de raccordement de câbles d'alimentation d'au moins un site d'utilisation et
- coplanaires, dans une zone de raccordement à des câbles ou barres formant la colonne montante.

Grâce à l'invention, il est possible d'utiliser des dispositifs de raccordement modulaire tels que connus de FR-A-2 715 775 et commercialisés par la Demanderesse sous la dénomination RMBT (marque déposée) et les accessoires développés pour ces dispositifs afin d'alimenter en énergie électrique les différents locaux d'un immeuble de plusieurs étages. L'invention permet de tirer parti du caractère modulaire d'un système à barres du type précité dans la mesure où le type de raccordement de chaque site d'utilisation, voire le nombre de raccordements prévu à chaque étage, peut être modifié en fonction des besoins des utilisateurs ou de leur répartition. L'invention permet également de faire transiter un ampérage important, par exemple de l'ordre de 400 ampères, dans la colonne montante qui est avantageusement constituée de câbles conducteurs. Le type de jeu de barres utilisé sera avantageusement adapté au courant maximum prévu. Un jeu de barres réduit et économique peut être utilisé jusqu'à 200 ampères, alors qu'un jeu de barres à section plus importante est utilisé entre 200 et 400 ampères. De même, les connecteurs utilisés sur chaque jeu de barres sont adaptés, sur le plan électrique et économique, à la valeur du courant maximum prévu. Le caractère coplanaire des barres au niveau de la colonne montante évite la déformation, perpendiculairement à leur direction principale, des câbles conducteurs ou des barres isolées qui constituent cette colonne montante.

D'autres aspects avantageux de l'invention ressortent de l'objet des revendications dépendantes ci-annexées.

L'invention sera mieux comprise et d'autres avantages de celle-ci apparaîtront plus clairement à la lumière de la description qui va suivre de six modes de réalisation d'un système de distribution d'énergie électrique conforme à son principe, donnée uniquement à titre d'exemple et faite en référence aux dessins annexés dans lesquels :
- la figure 1 est une représentation de principe d'un système conforme à l'invention de distribution d'énergie électrique dans un immeuble ;
- la figure 2 est une vue de face d'une partie du système de la figure 1, au niveau du premier étage ;
- la figure 3 est une vue en perspective éclatée du système à barres appartenant au dispositif de la figure 2 ;
- la figure 4 est une vue en perspective du système à barres de la figure 3 partiellement raccordé ;
- la figure 5 est une vue analogue à la figure 2 pour un système conforme à un second mode de réalisation de l'invention ;
- la figure 6 est une vue analogue à la figure 4 pour le système de la figure 5 ;
- la figure 7 est une vue en perspective éclatée d'un connecteur utilisé dans le système des figures 5 et 6 ;
- la figure 8 est une représentation schématique de principe en perspective d'un système conforme à un troisième mode de réalisation de l'invention ;
- la figure 9 est une vue analogue à la figure 8 pour un système conforme à un quatrième mode de réalisation de l'invention ;
- la figure 10 est une vue analogue à la figure 8 pour un système conforme à un cinquième mode de réalisation de l'invention ;
- la figure 11 est une vue à plus grande échelle et avec arrachement partiel du détail XI à la figure 10 en configuration assemblée du système et
- la figure 12 est une vue analogue à la figure 8 pour un système conforme à un sixième mode de réalisation de l'invention.

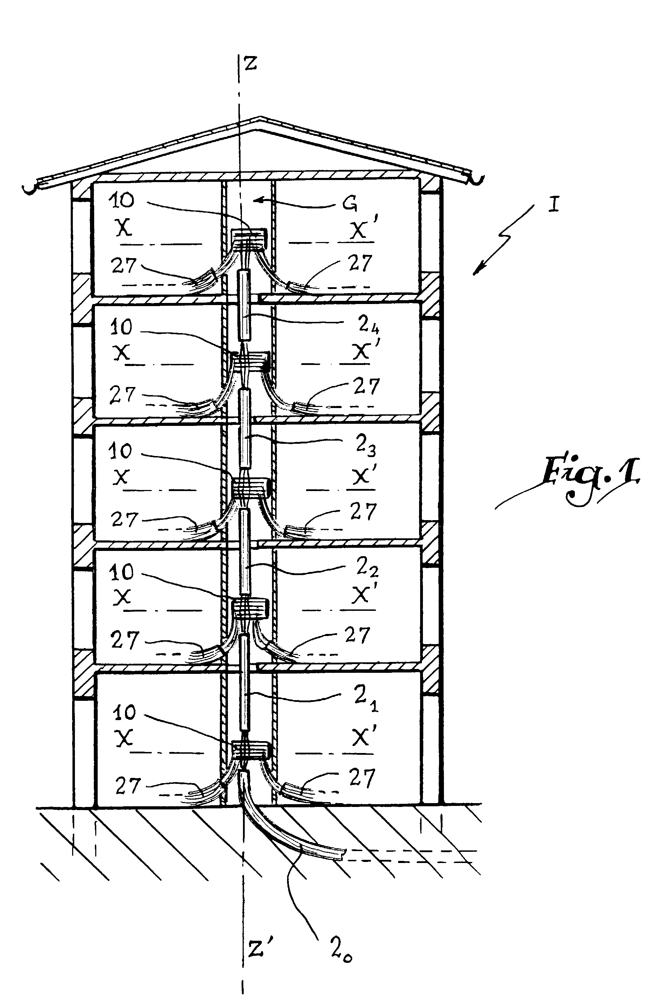

A la figure 1, une colonne montante 1 est installée dans une gaine technique G s'étendant verticalement sur toute la hauteur d'un immeuble I. La colonne 1 est formée de tronçons successifs de câbles 2₀, 2₁, 2₂, 2₃ et 2₄ comprenant chacun quatre conducteurs. Les conducteurs 3₁ et 3₂ des tronçons de câbles 2₁ et 2₂ sont raccordés entre eux au premier étage de l'immeuble, au niveau d'un jeu ou système à barres 10 qui comprend trois barres 11, 12, 13, destinées à véhiculer les phases d'un courant triphasé transitant par la colonne montante 1, et une barre de neutre 14.

Les barres 11 à 14 sont disposées parallèlement les unes aux autres selon une direction X-X' globalement horizontale, c'est-à-dire perpendiculaire à la direction Z-Z' de la colonne montante. Les barres 11 à 14 sont immobilisées entre un cache ou couvercle isolant 15 et un socle 16, les barres étant fixées sur le socle 16 par tout moyen approprié.

Deux zones latérales 20A et 20B sont prévues de part et d'autre de la colonne montante 1 pour le raccordement de câbles d'alimentation d'appartements ou autres sites d'utilisation sur les barres 11 à 14. Dans ces zones 20A et 20B, les barres 11 à 14 sont conformées en une structure étagée, c'est-à-dire dans laquelle elles sont disposées dans des plans différents parallèles à la direction X-X', une telle disposition étant, par exemple, connue de FR-A-2 715 775. Des ouvertures 21A, 21B, 22A, 22B, 23A, 23B et 24A, 24B ménagées dans le cache ou couvercle 15 permettent le raccordement sur les barres 11 à 14, au niveau des zones 20A et 20B, de connecteurs 25 fixés à l'extrémité de conducteurs 26 appartenant à des câbles 27 d'alimentation de sites d'utilisation, tels que des appartements. Ces connecteurs peuvent être conformes aux enseignements de FR-A-2 715 775, de FR-A-2 731 847 de FR-A-2 751 465, de FR-A-2 757 688 et, plus généralement, de tout type approprié.

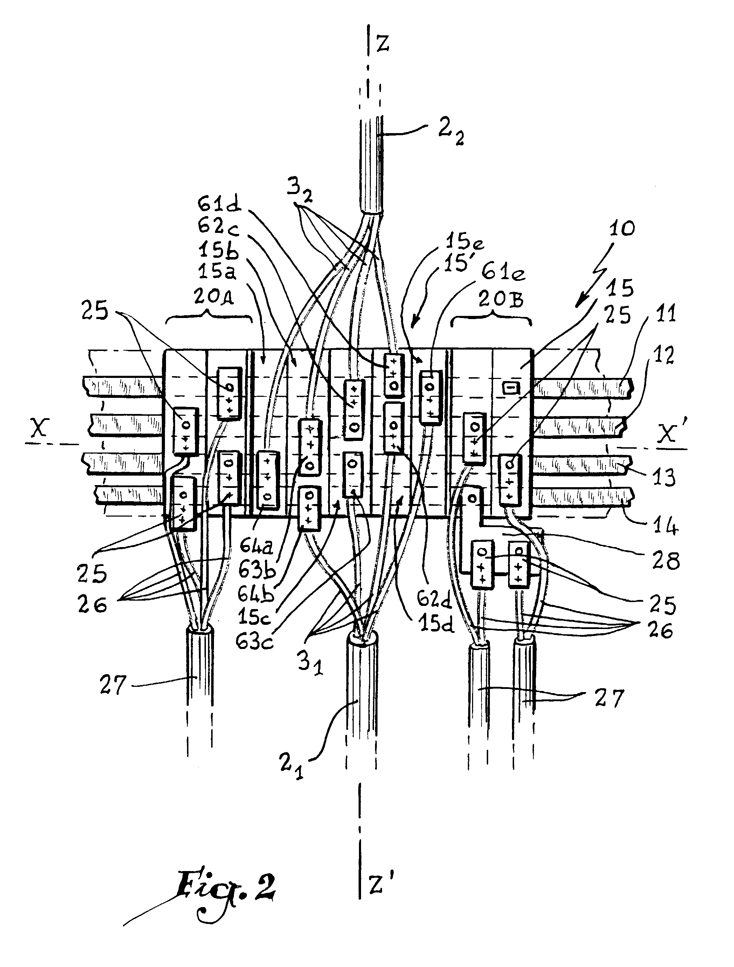

Les connecteurs 25 raccordés dans les zones 20 servent à alimenter des sites d'utilisation en courant triphasé, comme représenté sur la gauche de la figure 2, ou en courant monophasé, comme représenté sur la droite de la figure 2, un connecteur spécifique 28 étant alors utilisé pour raccorder deux conducteurs 26 à la barre de neutre 14. Des fusibles ou autres moyens de coupure sont prévus sur chacun des connecteurs 25, y compris ceux dédiés au neutre, de telle sorte que l'installation est conforme à la norme NF C 14-100.

Conformément à l'invention, les barres 11 à 14 sont coplanaires dans une zone 30 disposée sur le passage de la colonne montante 1. On note P le plan commun des surfaces supérieures des barres 11 à 14 dans la zone 30. Cette zone de raccordement plane est obtenue en cintrant les barres 11 à 14 perpendiculairement à leur direction principale X-X'. Chaque barre 11 à 14 est contre-coudée une première fois au niveau d'un premier bord latéral 30A de la zone 30 jouxtant la zone 20A et une seconde fois au niveau d'un second bord latéral 30B jouxtant la zone 20B. Entre les parties contre-coudées, les barres 11 à 14 sont coplanaires.

La partie centrale 15' du couvercle 15 qui recouvre les barres 11 à 14 dans la zone 30 est divisée en cinq bandes 15a à 15e parallèles à la direction Z-Z' de la colonne montante 1. Une ou deux ouverture(s) est ou sont découpée(s) dans chaque bande 15a à 15e, afin de permettre un accès localisé aux barres 11 à 14 dans la zone 30. Plus précisément, une ouverture 54a d'accès à la barre 14 est ménagée dans la bande 15a, une ouverture 53b et une ouverture 54b sont ménagées dans la bande 15b et permettent d'accéder respectivement aux barres 13 et 14. De même, une ouverture 52c et une ouverture 53c sont ménagées dans la bande 15c, une ouverture 51d et une ouverture 52d sont ménagées dans la bande 15d et une ouverture 51e est ménagée dans la bande 15c.

Des zones 11d, 11e, 12c, 12d, 13b, 13c, 14a et 14b sont ainsi accessibles sur les barres 11 à 14 à travers les ouvertures précitées, chacune de ces zones étant percée d'un taraudage de réception d'une vis de fixation d'un connecteur.

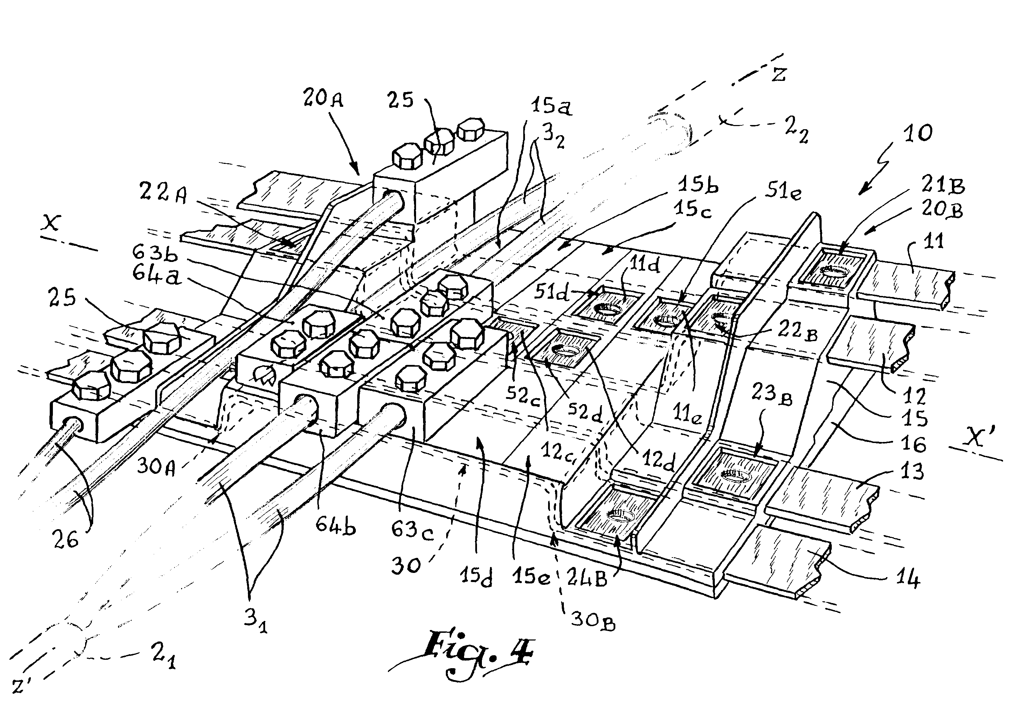

Comme il ressort plus clairement de la figure 4, un connecteur 64a peut être raccordé sur la barre 14 au niveau de l'ouverture 54a grâce à une vis de montage amovible 74a, le connecteur 64a étant relié à l'extrémité d'un conducteur 3₂ du câble 2₂. De la même manière, un connecteur 64b pourvu d'une vis de serrage 74b peut être raccordé à la barre 14 alors qu'il est lui-même raccordé à l'extrémité d'un conducteur 3₁ du câble 2₁. Il est ainsi possible de raccorder, à travers le conducteur 3₁, la barre 14 au neutre d'un réseau de distribution d'énergie électrique alors que le conducteur 3₂ permet de raccorder une barre d'un système équivalent situé à un étage supérieur.

Le fonctionnement est analogue pour les barres de phases 11 à 13 et l'on a représenté à la figure 4 un connecteur 63b raccordé sur l'ouverture 53b et un connecteur 63c raccordé sur l'ouverture 53c, ces connecteurs permettant d'alimenter la barre 13 avec la phase provenant du conducteur 3₁ raccordé au connecteur 63c et d'alimenter, avec la même phase, un conducteur 3₂ du câble 2₂ à destination d'un étage supérieur.

Des connecteurs identiques 61d, 61e, 62c et 62d sont utilisés pour le raccordement sur les barres 11 et 12, comme représenté à la figure 2.

Les connecteurs 64a et 64b utilisés pour le neutre sont raccordés sur la zone 30 en étant décalés parallèlement à la direction X-X'. De la même manière, les connecteurs 63b et 63c et équivalents sont décalés selon la direction X-X'.

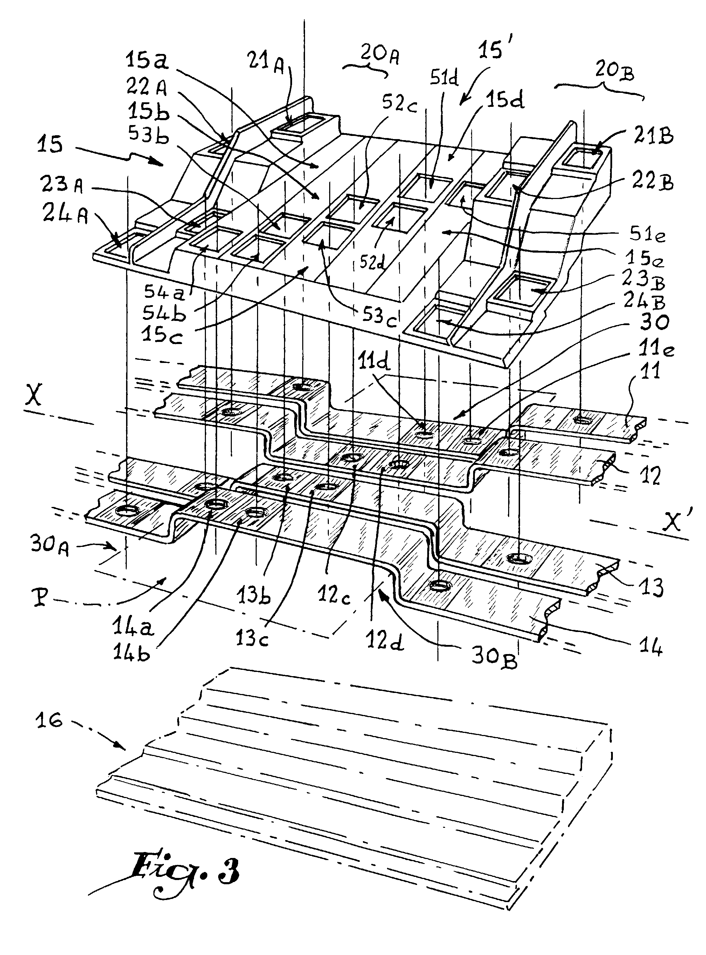

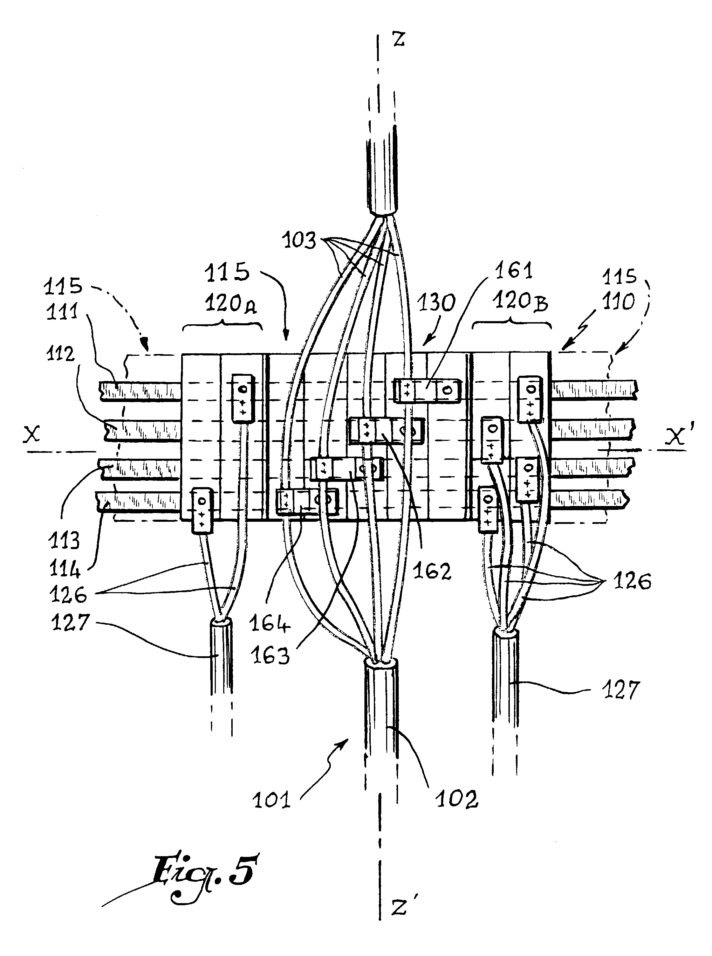

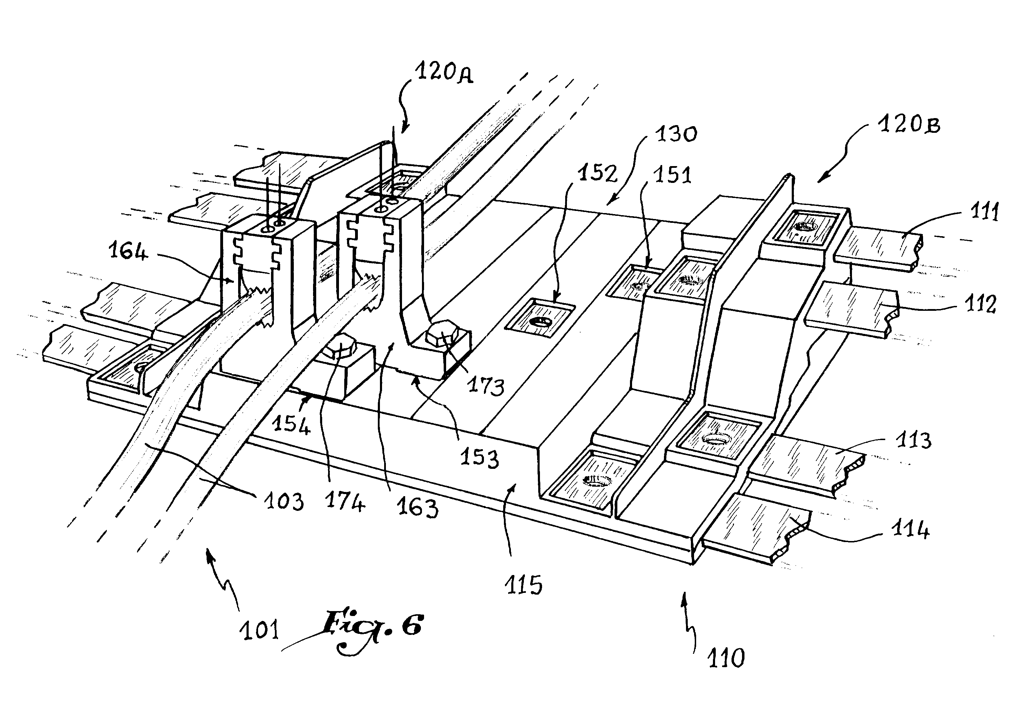

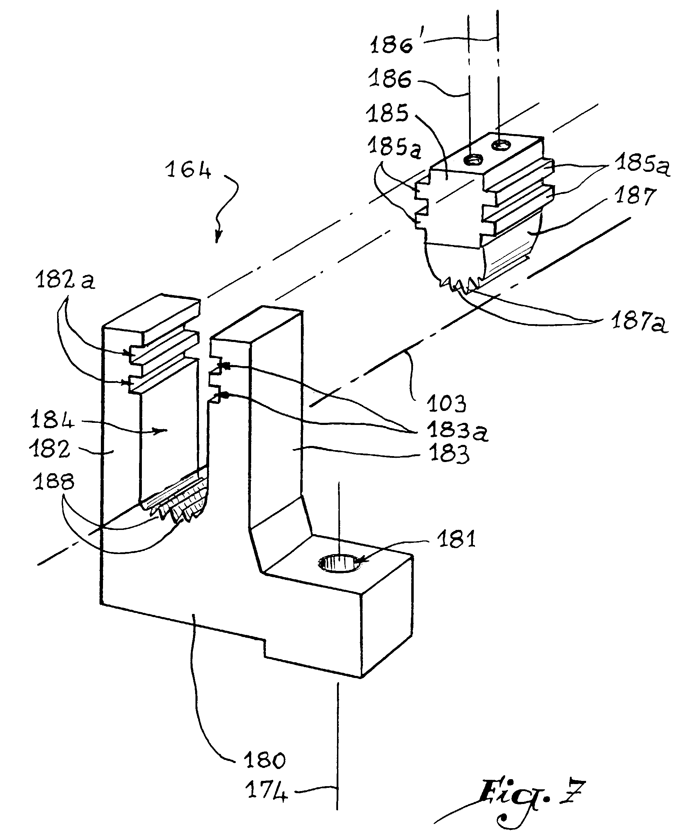

Dans le second mode de réalisation de l'invention représenté aux figures 5 à 7, les éléments analogues à ceux du mode de réalisation des figures 1 à 4 portent les références identiques augmentées de 100. Dans ce mode de réalisation, une colonne montante 101 est formée d'un unique câble conducteur 102 dont la gaine extérieure est retirée au niveau d'un jeu ou système 110 à barres horizontales 111 à 114. Les conducteurs 103 du câble 102 sont reçus dans des connecteurs 161 à 164 destinés à être fixés grâce à des vis, dont deux sont visibles à la figure 6 avec les références 173 et 174, sur des ouvertures 151 à 154 d'une zone de raccordement plane 130 formée par les barres 111 à 114 du système à barres qui sont coplanaires dans la zone 130. Les barres 111 à 114 sont contre-coudées au niveau des bords latéraux de la zone 130.

Des connecteurs 125 permettent de relier, dans des zones latérales 120A et 120B, des conducteurs 126, appartenant à des câbles 127 d'alimentation d'appartements en courant électrique, aux barres 111 à 114. Dans les zones 120A et 120B, ces barres sont conformées en escalier, c'est-à-dire disposées dans des plans différents.

Les zones 120A, 120B et 130 sont revêtues d'un cache ou module 115, dont la fonction est analogue à celle du cache 15 du premier mode de réalisation.

Le connecteur 164 est formé d'un socle 180 pourvu d'un perçage 181 de passage de la vis 174 et de deux branches 182 et 183 définissant entre elles un logement 184 permettant la réception d'un conducteur 103 sans sectionnement de celui-ci. Un coulisseau 185 est prévu pour être glissé entre les branches 182 et 183 et comprend des ailettes latérales 185a destinées à coopérer avec des rainures correspondantes 182a et 183a creusées sur les faces en regard des branches 182 et 183. Le coulisseau 185 est prévu pour être mis en place après que le conducteur 103 a été installé dans le logement 184.

Le coulisseau 185 porte deux vis 186 et 186' de déplacement d'un patin 187 de serrage du conducteur 103 contre des dents 188 de perforation de l'isolant du conducteur 103. Le patin 187 est lui-même pourvu de dents 187a de perforation d'isolant. Ainsi, le conducteur 103 disposé dans le logement 184 peut-il être raccordé à la barre 114 sans être interrompu.

Les connecteurs 161 à 163 sont identiques.

Les zones de raccordement 30 et 130 des deux modes de réalisation représentés diffèrent en ce qu'elles ne comprennent pas le même nombre d'ouvertures de raccordement aux barres du système à barres. Elles pourraient cependant être identiques car les connecteurs 161 à 164 du second mode de réalisation pourraient être utilisés avec la zone de raccordement 30 du premier mode de réalisation, auquel cas ils s'étendraient globalement sur deux ouvertures disposées en regard d'une même barre.

Les zones 20A, 20B, 120A et 120B ont été représentées avec une largeur, c'est-à-dire une dimension selon la direction X-X', relativement faible. En fait, ces zones de raccordement peuvent être élargies en fonction du nombre de raccordement à effectuer, ce qui correspond aux tracés en traits mixtes sur les figures 2 et 5.

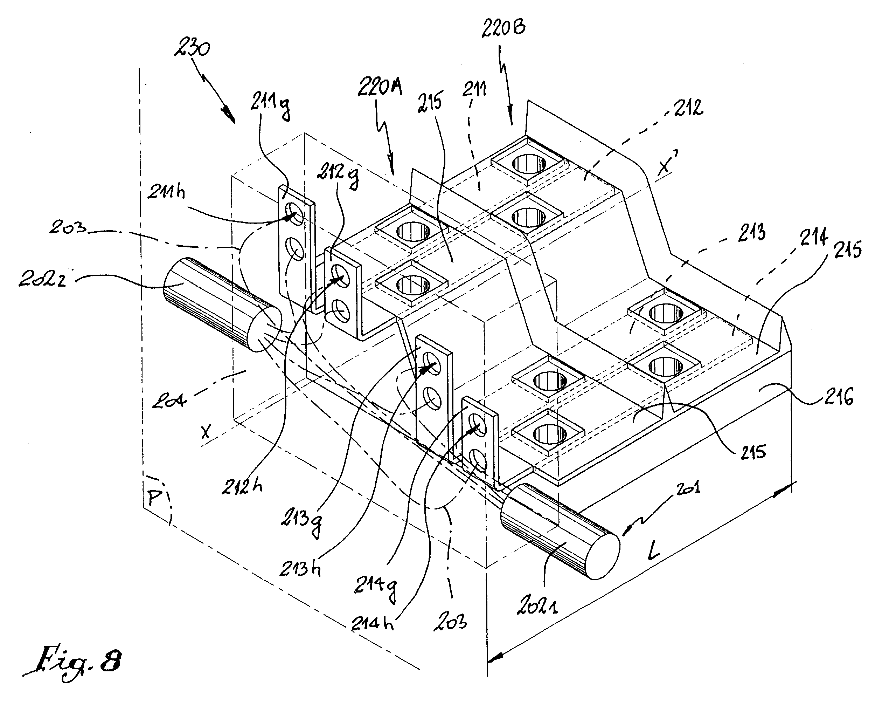

Dans le troisième mode de réalisation de l'invention représenté à la figure 8, les éléments analogues à ceux du mode de réalisation des figures 1 à 4 portent des références identiques augmentées de 200. Dans ce mode de réalisation, une colonne montante 201 est formée par une succession de tronçons de câble dont deux apparaissent à la figure 8 avec les références 202₁ et 202₂. Chaque tronçon de câble 202 comprend quatre conducteurs 203 représentés par des traits mixtes.

Les conducteurs 203 sont dégagés de la gaine des tronçons 201 et 202 à l'intérieur d'un boîtier 204 disposée sur le côté d'un socle 216 sur lequel sont posés des caches 215 définissant des zones étagées 220A et 220B de raccordement de conducteurs d'alimentation de sites d'utilisation situés à un étage.

Ces conducteurs et les connecteurs associés ne sont pas représentés, ils peuvent être du type de ceux, 25 et 26, mentionnés en référence à l'un des deux premiers mode de réalisation.

Ce mode de réalisation diffère des précédent, en ce que les barres 211 à 214 qui s'étendent, sur la plus grande partie de leur longueur selon une direction X-X' sont coudées, au niveau d'une de leurs extrémités et présentent chacune une partie d'extrémité 211g, 212g, 213g ou 214g dans laquelle sont prévues des zones de raccordement de connecteur d'extrémité des conducteurs 203, ces zones de raccordement étant matérialisées par des orifices 211h, 212h, 213h et 214h de réception de vis de blocage de connecteurs du type des connecteurs 61 à 64 du premier mode de réalisation.

Chaque partie 211g à 214g est pourvue de deux orifices 211h à 214h, ce qui permet le raccordement d'un conducteur 203 arrivant par le bas de la colonne montante 201 et d'un conducteur 203 repartant par le haut de cette colonne montante.

Conformément à l'invention, les parties 211g à 214g sont coplanaires et l'on note P le plan commun de leurs faces visibles à la figure 8, qui est celui de la zone 230 de raccordement des tronçons de câble 202₁ et 202₂ sur les barres 211 à 214.

Le plan P est perpendiculaire à la direction X-X', ce qui permet de diminuer la largeur totale L du dispositif par rapport à celui du premier mode de réalisation.

Les parties 211g à 214g étant incluses dans le boîtier 204, elles peuvent être exposées complètement. Cependant, selon un aspect avantageux de l'invention, un cache du type de la partie 15' du cache 15 du premier mode de réalisation peut être prévu en laissant un accès localisé aux barres 211 à 214 au niveau des orifices 211h à 214h.

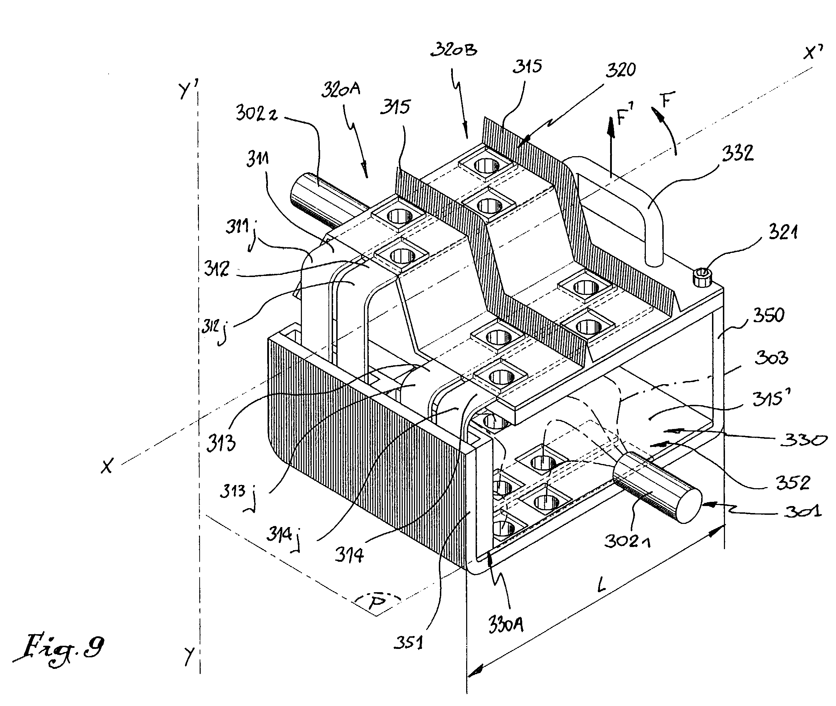

Dans le quatrième mode de réalisation de l'invention représenté à la figure 9, les éléments analogues à ceux du premier mode de réalisation portent des références identiques augmentées de 300.

Dans ce mode de réalisation, une colonne montante 301 est formée par des tronçons de câbles conducteur dont deux apparaissent à la figure 9 avec les références 302₁ et 302₂. Ces tronçons comprennent chacun quatre conducteurs 303 destiné à être reliés à des barres 311 à 314 s'étendant parallèmement les unes aux autres, selon une direction X-X', et étant coplanaires dans une zone 330 de raccordement de connecteurs non représentés, du type des connecteurs 61 à 64 du premier mode de réalisation.

On note P le plan des faces supérieures des barres 311 à 314 dans la zone 330.

Dans la zone 330, les barres 311 à 314 sont recouvertes par un cache isolant 315' définissant des ouvertures d'accès localisé et de connexion sur les barres 311 à 314. Ces ouvertures peuvent présenter la répartition spatiale des ouvertures 51 à 54 du premier mode de réalisation.

Les barres sont coudées à environ 90° sur un bord 330A de la zone 330 et s'étendent vers le haut dans la représentation de la figure 9 parallèlement à une branche 351 d'une armature isolante 350 en forme de U. Au niveau du bord supérieur de la branche 351, ou à proximité de ce bord, les barres 311 à 314 sont à nouveau chacune coudées à environ 90° dans le même sens qu'au niveau du bord 330A, de telle sorte que chaque barre 311 à 314 a une forme de U couché, l'une des branches du U formé par chaque barre 311 à 314 étant posée sur le fond 352 de l'armature 350, et recouverte par le cache 315'.

Au niveau de leurs branches respectives 311j à 314j distantes du fond 312, les barres 311 forment une structure étagée susceptible de coopérer avec un module 320 formant deux zones 320A et 320B de raccordement de connecteurs de câbles d'alimentation de sites d'utilisation d'énergie, ces connecteurs pouvant être du type de ceux, 25 ou équivalents, représentés en référence aux deux premiers mode de réalisation de l'invention. Un cache 315 définit des ouvertures de raccordement des connecteurs dans les zones 320A et 320B, ces ouvertures ayant, de préférence, une répartition spatiale analogue aux ouvertures correspondantes 21 à 24 du premier mode de réalisation.

Le module 320 est immobilisé sur l'armature 350 grâce à des vis dont une seule apparaît à la figure 9 avec la référence 321.

Ainsi, les zones 320A et 320B d'une part, et 330 d'autre part, sont formées chacune dans deux nappes qui sont supperposées dans une direction Y-Y' globalement perpendiculaire au plan P et à la direction X-X'.

Ce mode de réalisation présente l'avantage d'une grande compacité, la largeur L du système ainsi réalisée étant du même ordre de grandeur que la largeur commulée des zones 320A et 320B.

Pour raccorder les conducteurs 303 sur la zone 330, on utilise la souplesse des barres 311 à 314, car les parties coudées de ces barres qui sont visibles à la figure 9, constituent en fait les charnières d'articulation du module 320 par rapport à l'armature 350, ce module pouvant être pivoté dans le sens de la flèche F à la figure 9, après retrait des vis 321 et équivalentes et grâce à un effort F' exercé sur une poignée 322 solidaire du module 320.

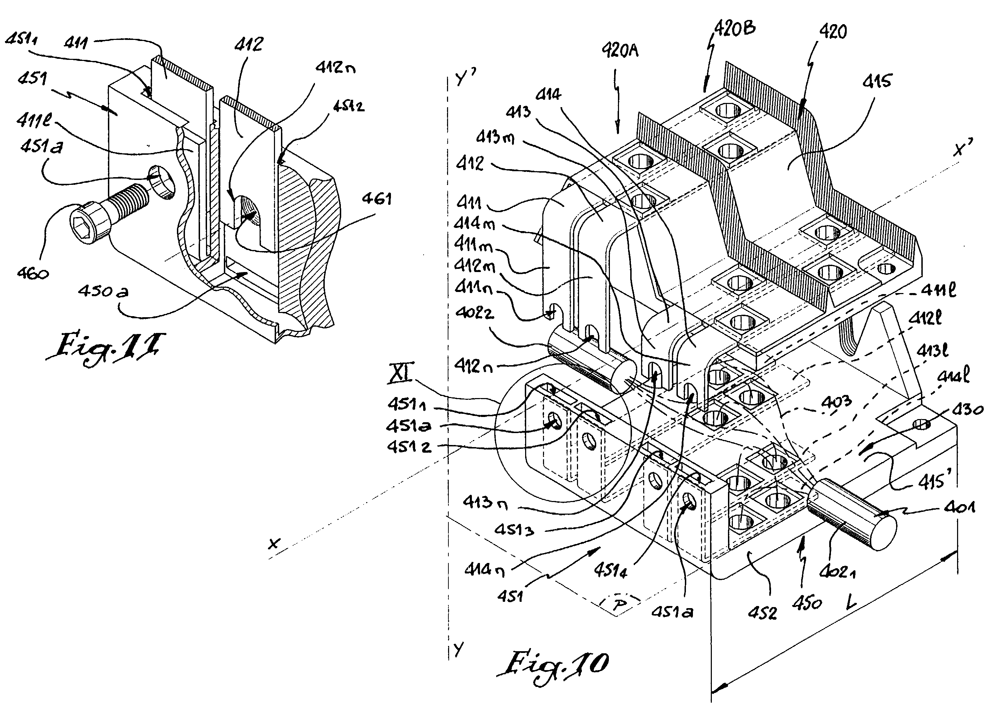

Dans le quatrième mode de réalisation de l'invention représenté aux figures 10 et 11, les éléments analogues à ceux du premier mode de réalisation porte des références identiques augmentées de 400.

Dans ce mode de réalisation, des barres 411 à 414 sont formées chacune d'une première partie 411l à 414l plaquée sur le fond 452 d'une armature isolante 450 où elles sont parallèles à une direction X-X'. Ces barres sont également coudées à environ 90° et s'étendent, à travers des fentes dont une est visible à la figure 11 avec la référence 450a, à l'intérieur d'un côté 451 de l'armature 450. Les parties 411l à 414l sont coplanaires dans une zone 430 et l'on note P le plan commun des surfaces supérieures des parties 411l à 414l.

Les barres 411 à 414 comprennent également une seconde partie, 411m à 414m, se terminant chacune par une fourche, 411n à 414n, destinée à pénétrer dans un logement 451₁ à 451₄ prévu dans l'épaisseur du côté 451.

Le côté 451 est également pourvu d'orifices 451a de passage de vis 460 de blocage des fourches 411n à 414n dans les logements 451₁ à 451₄, ces fourches étant alors en contact électrique par recouvrement avec les extrémités des parties 411l à 414l, de sorte que les barres 411 à 414 formées respectivement des parties 411l et 411m, 412l et 412m, 413l et 413m, 414l et 414m, assurent chacune une continuité électrique. L'effort de serrage exercé par les vis 460 insérées dans des taraudages 461 assure un contact électrique stable dans le temps entre les parties constitutives des barres 411 à 414.

Comme dans le mode de réalisation précédent, les parties 411m à 414m forment une structure étagée associée à un module 420 formant deux zones 420A et 420B de raccordement de câbles d'alimentation de sites d'utilisation d'énergie électriques au moyen de connecteurs, du type de ceux représenté au premier mode de réalisation, aptes à être branchées sur des ouvertures définies par un cache isolant 415.

Comme précédemment également, une colonne montante 401 est formée de tronçons de câbles 402₁ à 402₂ comprenant chacune quatre conducteurs 403, prévus pour être raccordés sur des zones d'accès localisées aux parties 411l à 414l des barres 411 à 414, au moyen de connecteurs du type de ceux 61 à 64 représentés dans le premier mode de réalisation. Les zones d'accès aux barres 411 à 414 sont définies par un cache isolant 415'.

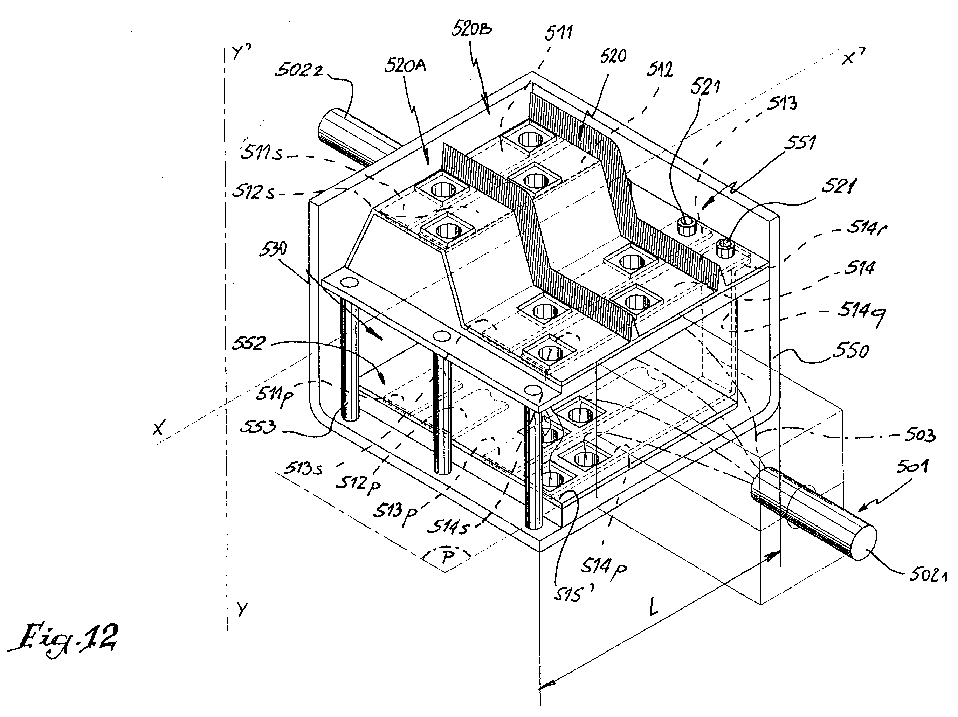

Dans le sixième mode de réalisation de l'invention représenté à la figure 12, les éléments analogues à ceux du premier mode de réalisation portent des références identiques augmentées de 500. La colonne montante 501 de ce premier mode de réalisation est réalisé par des tronçons de câbles 502₁ à 502₂ comprenant chacun quatre conducteurs 503 et apte à être raccordés, dans une zone 530 globalement plane, à des barres 511 à 514 disposées parallèlement les unes aux autres selon une direction X-X' et coplanaires dans la zone 530. On note P le plan des surfaces supérieures des barres 511 à 514 dans la zone 530.

Les barres 511 à 514 comprennent chacune une partie 511p à 514p s'étendant dans la zone 530 et recouverte d'un cache-isolant 515' définissant des zones d'accès localisées aux barres 511 à 514.

Sur un côté, la partie 514p de la barre 514 se prolonge par une partie 514g globalement perpendiculaire au plan P, cette partie étant pourvu d'un talon 514r orienté à 90° par rapport à la partie 541g, c'est-à-dire globalement parallèle à la partie 514p. La barre 514 est en appui sur une armature 550, la partie 514g étant disposée contre un côté intérieur ou dans l'épaisseur d'un côté 551 de l'armature 550.

Un module 520 définit deux zones 520A et 520B de branchement de connecteurs de raccordement de câbles d'alimentation de sites d'utilisation de l'énergie électrique qui peuvent être du type de ceux, 25, décrits en référence au premier mode de réalisation.

Les zones 520A et 520B sont des structures étagées dans lesquelles sont intégrées des parties 511s à 514s des barres 511 à 514, ces parties étant destinées à être plaquées sur les talons des barres 511 à 514 équivalents au talon 514r, étant entendu que les barres 511 à 513 ont, dans la partie inférieure du dispositif, une conformation analogue à celle de la barre 514.

Des vis 521 permettent à la fois de fixer le module 520 sur l'armature 550 et également d'assurer un contact électrique ferme entre les parties 511s et 514s et les talons 514r et équivalents des barres 511 à 514.

Du côté opposé au côté 551, le dispositif est équipé de tiges ou entretoises 553 d'écartement du module 320 par rapport au fond 552 de l'armature 550.

Comme les trois précédents, ce mode de réalisation présente l'avantage particulier d'avoir une largeur L du même ordre de grandeur que la largeur utile des zones étagées 520A et 520B.

Dans le cinquième et sixième mode de réalisation, les zones 420A, 420B, 520A, 520B sont superposées par rapport aux zones 430 et 530 selon une direction Y-Y' perpendiculaire au plan P et à la direction X-X'.

L'invention a été décrite avec une colonne montante formée de câbles conducteurs. Elle est cependant applicable à une colonne montante formée de barres conductrices isolées. De même, les câbles à quatre conducteurs qui ont été représentés peuvent être remplacés par quatre câbles conducteurs simples, ce qui évite de retirer une gaine externe à chaque étage.

## Revendications

1. Système de distribution d'énergie électrique dans les étages d'un immeuble comprenant une colonne montante conductrice de l'électricité et des répartiteurs installés à chaque étage, caractérisé en ce qu'il comprend, à chaque étage, un jeu (10 ; 110) de barres (11-14 ; 111-114 ; 211-214 ; 311-314 ; 411-414 ; 511-514) disposées parallèlement les unes aux autres selon une direction (X-X') globalement horizontale, lesdites barres étant
- réparties selon une géométrie en escalier dans au moins une zone (20A, 20B ; 120A, 120B ; 220A, 220B ; 320A, 320B ; 420A, 420B ; 520A, 520B) où elles sont aptes à coopérer avec des connecteurs (25 ; 125) de raccordement de câbles (27 ; 127) d'alimentation d'au moins un site d'utilisation et
- coplanaires dans une zone de raccordement (30 ; 130 230 ; 330 ; 430 ; 530) à des câbles (2₀-2₄ ; 102 ; 202 ; 302 ; 402 ; 502) ou barres formant ladite colonne montante (1 ; 101 ; 201 ; 301 ; 401 ; 501).

2. Système selon l'une des revendications précédentes, caractérisé en ce que ladite zone (20A, 20B ; 120A, 120B ; 220A ; 220B) de raccordement de câbles (27, 127) d'alimentation d'au moins un site d'utilisation et ladite zone (30 ; 130 ; 230) de raccordement à ladite colonne montante sont juxtaposées selon ladite direction (X-X') globalement horizontale.

3. Système selon l'une des revendications 1 ou 2, caractérisé en ce que chaque barre (11-14 ; 111-114 ; 511-514) est contre-coudée au niveau d'au moins un bord latéral (30A, 30B) de ladite zone de raccordement (30 ; 130 ; 530) à ladite colonne montante (1 ; 101 ; 501).

4. Système selon l'une des revendications 1 ou 2, caractérisé en ce que ladite zone de raccordement (230) à ladite colonne montante est formée par des extrémités coudées (211g-214g) desdites barres (211-214) et s'étend dans un plan (P) globalement perpendiculaire à ladite direction (X-X') globalement horizontale.

5. Système selon la revendication 1, caractérisé en ce que ladite zone (320A, 320B ; 420A, 420B ; 520A ; 520B) de raccordement de câbles d'alimentation d'au moins un site et ladite zone (330 ; 430 ; 530) de raccordement à ladite colonne montante (301 ; 401 ; 501) sont disposées en deux nappes superposées selon une direction (Y-Y') globalement perpendiculaire au plan (P) de ladite zone de raccordement (330 ; 430 ; 530) à ladite colonne montante.

6. Système selon la revendication 5, caractérisé en ce que lesdites barres (311-314) sont déformables et coudées entre lesdites deux zones de raccordement (320A, 320B, 330).

7. Système selon la revendication 5, caractérisé en ce que lesdites barres (411-414 ; 511-514) sont interrompues entre lesdites deux zones de raccordement (420A, 420B, 430 ; 520A, 520B, 530).

8. Système selon l'une des revendications précédentes, caractérisé en ce que lesdites barres (11-14 ; 111-114 ; 311-314 ; 411-414 ; 511-514) sont revêtues d'au moins un cache isolant (15 ; 115 ; 315' ; 415' ; 515') définissant, dans ladite zone (30 ; 130 ; 330 ; 430 ; 530) de raccordement à ladite colonne montante (1 ; 101 ; 301 ; 401 ; 501), des ouvertures (51-54 ; 151-154) de connexion auxdites barres.

9. Système selon la revendication 8, caractérisé en ce que ledit cache (15 ; 315' ; 415' ; 515') définit deux ouvertures (51d, 51e, 52c, 52d, 53b, 53c, 54a, 54b) de connexion à chacune desdites barres (11-14 ; 311-314 ; 411-414 ; 511-514), lesdites ouvertures étant décalées parallèlement à la direction (X-X') desdites barres.

10. Système selon l'une des revendications précédentes, caractérisé en ce que les câbles (2₀-2₄ ; 202 ; 302 ; 402 ; 502) ou barres formant ladite colonne montante sont interrompus à chaque étage et raccordés auxdites barres, dans ladite zone de raccordement (30 ; 230 ; 330 ; 430 ; 530), par des connecteurs (61d, 61e, 62c, 62d, 63b, 63c, 64a, 64b), deux connecteurs correspondant à la même phase ou au neutre de ladite colonne montante étant décalés parallèlement à la direction (X-X') desdites barres.

11. Système selon l'une des revendications précédentes, caractérisé en ce qu'il comprend des moyens (61d, 61e, 62c, 62d, 63c, 63b, 64a, 64b ; 161-164) de raccordement amovible entre ladite colonne montante (1 ; 101 ; 201 ; 301 ; 401 ; 501) et lesdites barres (11-14 ; 111-114 ; 211-214 ; 311-314 ; 411-414 ; 511-514) dans ladite zone de raccordement (30 ; 130 ; 230 ; 330 ; 430 ; 530).

12. Système selon la revendication 11, caractérisé en ce que lesdits moyens de raccordement comprennent au moins un connecteur (61d, 61e, 62c, 62d, 63c, 63d, 64a, 64b) apte à recevoir une extrémité d'une barre ou d'un conducteur (3₁, 3₂ ; 203 ; 303 ; 403 ; 503) appartenant à un câble (2₀-2₄ ; 202 ; 302 ; 402 ; 502) de ladite colonne montante (1 ; 201 ; 301 ; 401 ; 501).

13. Système selon la revendication 12, caractérisé en ce que les connecteurs (61e, 61d, 62d, 62c, 63c, 63b, 64a, 64b) associés à deux câbles (3, 3' ; 203 ; 303 ; 403 ; 503) ou barres de ladite colonne montante (1 ; 201 ; 301 ; 401 ; 501) véhiculant une même phase ou le neutre sont décalés parallèlement à la direction (X-X') desdites barres.

14. Système selon la revendication 11, caractérisé en ce que lesdits moyens de raccordement comprennent au moins un connecteur (161-164) de réception d'une partie intermédiaire d'une barre ou d'un conducteur (103) appartenant à un câble (102) de ladite colonne montante (101) dans un logement pourvu de moyens (185-188) de serrage et de perforation d'isolant.

15. Système selon la revendication 14, caractérisé en ce que ledit connecteur (161-164) forme un logement ouvert (184) apte à être équipé d'un organe amovible (185) de support de moyens (186, 187) d'immobilisation dudit conducteur (103) ou de ladite barre.
